Europäisches Patentamt

(19) European Patent Office

Office européen des brevets

(11) Numéro de publication : **0 292 346 B1**

## (12) FASCICULE DE BREVET EUROPEEN

(45) Date de publication du fascicule du brevet :
**17.07.91 Bulletin 91/29**

(51) Int. Cl.⁵ : **F16K 1/226, F16K 1/228, F16J 15/32**

(21) Numéro de dépôt : **88401036.4**

(22) Date de dépôt : **28.04.88**

(54) Garniture de étanchéité à anneau de réaction incorporé, notamment pour obturateur.

(30) Priorité : 20.05.87 FR 8707035

(43) Date de publication de la demande :
23.11.88 Bulletin 88/47

(45) Mention de la délivrance du brevet :
17.07.91 Bulletin 91/29

(84) Etats contractants désignés :
BE DE ES GB IT NL SE

(56) Documents cités :
EP-A- 0 202 156
FR-A- 2 331 725
FR-A- 2 398 940
FR-A- 2 559 232

(73) Titulaire : APPLICATIONS MECANIQUES ET
ROBINETTERIE INDUSTRIELLE A.M.R.I.
Société anonyme dite:
Les Mercuriales 40, rue Jean Jaurès
F-93176 Bagnolet Cédex (FR)

(72) Inventeur : Garrigues, Jean-Claude
10, Chemin Chantecric
F-33140 Cadaujac (FR)
Inventeur : Laulhe, René
5, Parc d'Ornon
F-33140 Villanave d'Ornon (FR)
Inventeur : Rieuvernet, Pierre
27, Avenue Carnot
F-33700 Merignac (FR)

(74) Mandataire : Marquer, Francis et al
Cabinet Moutard 35, Avenue Victor Hugo
F-78960 Voisins le Bretonneux (FR)

## Description

La présente invention concerne un dispositif d'étanchéité destiné notamment à assurer l'étanchéité amont/aval d'un obturateur.

Elle s'applique plus particulièrement aux obturateurs du type comprenant un organe d'obturation mobile à l'intérieur d'un corps tubulaire et comportant, à sa périphérie, une surface d'étanchéité venant porter, en fin de course d'obturation, sur une garniture d'étanchéité circulaire et ce, au terme d'un déplacement tangent ou parallèle à l'axe principal de symétrie de ladite garniture d'étanchéité.

L'invention convient également aux obturateurs dans lesquels, selon un montage inverse, l'alésage du corps comprend une surface d'étanchéité sensiblement conique et l'organe d'obturation porte, à sa périphérie, une garniture assurant une étanchéité statique avec l'organe d'obturation et une étanchéité dynamique avec ladite surface d'étanchéité.

Il s'avère donc que dans ces types d'obturateurs, la garniture d'étanchéité doit satisfaire à de multiples fonctions. Elle doit à la fois assurer l'étanchéité statique, l'étanchéité dynamique ainsi que la continuité de l'étanchéité entre l'étanchéité statique et l'étanchéité dynamique.

Ces fonctions d'étanchéité sont particulièrement délicates à obtenir notamment dans le cas où, en raison des conditions de fonctionnement de l'obturateur, la garniture d'étanchéité doit à la fois être réalisée en un matériau mou capable de s'adapter à l'état de surface de la portée du siège afin d'assurer la meilleure étanchéité, en matériau dur et rigide capable de résister aux efforts mécaniques dus à la pression de contact garniture/siège et à la pression du fluide à étancher, et suffisamment flexible pour permettre des déplacements relatifs, organe d'obturation/corps sans nuire à l'étanchéité.

En effet, dans le cas où, en position de fermeture de l'obturateur, la surface d'étanchéité de l'organe d'obturation ne se trouve pas exactement centrée sur la portée d'étanchéité dynamique de la garniture, celle-ci ne se trouve pas uniformément comprimée, de sorte que l'on n'obtient pas une étanchéité homogène tout autour de l'obturateur. Dès lors, dans les parties où la garniture se trouve fortement comprimée par l'organe d'obturation, l'obturateur peut résister à des pressions importantes alors que, dans les parties diamétralement opposées à ces dernières, l'étanchéité est douteuse et les risques de fuite à haute pression sont importants.

Pour supprimer ces inconvénients, on a songé à équiper les obturateurs de mécanismes de centrage de l'organe d'obturation par rapport à la garniture d'étanchéité, ces mécanismes intéressant, soit la cinématique de l'obturateur, soit l'obturateur lui-même.

Toutefois, ces solutions sont complexes, peu fiables et entraînent une augmentation considérable du prix de revient des obturateurs.

On a également proposé de réaliser la garniture d'étanchéité sous la forme d'un double joint torique métallique flexible comprenant :

– une première structure de joint torique métallique flexible destinée à assurer l'étanchéité statique avec le corps de l'obturateur,

– une seconde structure de joint torique métallique flexible destinée à assurer l'étanchéité dynamique,

– des moyens permettant de relier, de façon étanche, ces deux structures de joint.

Des garnitures d'étanchéité de ce genre se trouvent décrites notamment dans le brevet FR-A-2 559 232 et dans le brevet EP-A-202 156.

Selon un autre mode d'exécution connu, la garniture d'étanchéité fait, en outre, intervenir :

– une membrane radiale réalisée en un matériau élastique reliant les deux structures d'étanchéité en les enveloppant au moins en partie de manière à assurer la continuité de l'étanchéité entre l'étanchéité statique et l'étanchéité dynamique, et à permettre à la fois un autocentrage de la deuxième structure de joint sur la surface d'étanchéité de l'organe d'obturation, et

– un anneau de réaction flottant, monté serré contre la deuxième structure de joint à l'opposé de la zone de cette structure où vient porter la surface d'étanchéité de l'organe d'obturation.

Une telle garniture d'étanchéité qui se trouve décrite dans le brevet français FR-A-2398940 au nom de la Demanderesse pour : "Double joint torique flexible", permet d'obtenir d'excellents résultats notamment dans le cas de vannes ou de robinets destinés à fonctionner dans des conditions (hautes ou basses températures) pour lesquelles l'emploi de garnitures classiques en élastomère se trouve prohibé.

Il s'avère qu'en dépit de ces avantages, cette garniture présente néanmoins un certain nombre d'inconvénients.

Tout d'abord, elle fait intervenir un anneau de réaction amovible non solidarisé à l'ensemble formé par les deux structures de joint torique et par la membrane souple.

Il est clair que cette particularité rend plus délicat le montage de la garniture dans l'obturateur et engendre un risque de perte de l'anneau de réaction avant montage, par exemple lors d'opérations de manutention, de stockage, de livraison ou autres, dont font l'objet ces garnitures.

Un autre inconvénient résultant de la structure de cette garniture consiste en ce qu'elle ne permet pas d'assurer un bon centrage initial de l'anneau de réaction sur la structure de joint torique avec laquelle il coopère pour réaliser l'étanchéité dynamique de l'obturateur. Par ailleurs, une fois la garniture montée dans l'obturateur, l'anneau de réaction jouit d'une certaine mobilité axiale qui rend ce centrage aléatoire. En outre, en raison de la forme dissymétrique de la garniture, les contraintes exercées par ladite structure de joint lorsqu'elle se trouve soumise à l'action de l'obturateur tendront à déplacer axialement cet anneau de réaction en augmentant son décentrage.

En conséquence, l'anneau de réaction qui sera chargé dissymétriquement ne pourra pas exercer une action optimale sur la structure de joint et, notamment dans le cas où la course de fermeture de l'obturateur n'est pas parallèle à l'axe de la garniture, il peut se produire à la longue une ovalisation de la structure de joint.

On notera enfin qu'en raison de la dissymétrie des contraintes qu'il reçoit, l'anneau de réaction doit nécessairement consister en une pièce massive, à l'exclusion de tous autres matériaux, éventuellement composites, qui pourraient être envisagés en vue d'accroître la souplesse de la surface d'étanchéité de la structure de joint dynamique.

L'invention a donc pour but de supprimer ces inconvénients.

Elle propose une garniture d'étanchéité apte à assurer l'étanchéité amont/aval d'un obturateur du type comprenant un organe d'obturation mobile à l'intérieur d'un corps tubulaire, cette garniture comportant :

    – deux éléments d'étanchéité de forme circulaire, sensiblement concentriques, à savoir : un premier élément destiné à assurer une étanchéité statique et un deuxième élément comprenant, du côté opposé à la première structure, une surface d'étanchéité circulaire destinée à coopérer avec une portée d'étanchéité également circulaire pour assurer une étanchéité dynamique,

    – une membrane, élastiquement déformable, assurant une liaison étanche entre lesdits éléments, et

    – un anneau de réaction, monté serré contre le deuxième élément d'étanchéité, à l'opposé de la susdite surface d'étanchéité, de manière à réaliser un ensemble radialement mobile à distance du premier élément d'étanchéité.

Selon l'invention, cette garniture est caractérisée en ce que le susdit deuxième élément d'étanchéité comprend une enveloppe formant un logement annulaire dont une portion circulaire constitue la susdite surface d'étanchéité, ce logement renfermant d'une part un sommier annulaire élastiquement déformable, agencé de manière à agir sur ladite surface d'étanchéité, et d'autre part l'anneau de réaction qui est maintenu serré contre ledit sommier, et en ce que cette enveloppe comprend deux parois opposées qui assurent un centrage permanent dudit sommier et dudit anneau.

Il s'avère donc que la garniture précédemment décrite forme un ensemble unitaire relativement compact et est, de ce fait, d'un usage plus aisé, notamment au montage.

Grâce au centrage assuré par les susdits moyens de centrage, l'action de l'anneau de centrage, qui est chargé symétriquement, est plus efficace.

Du fait qu'il est maintenu par l'enveloppe, cet anneau de réaction peut être réalisé à partir de divers matériaux. Il peut en particulier être réalisé en feuillard spiralé ou bien en une superposition de bagues agencées les unes dans les autres.

Avantageusement, la susdite enveloppe pourra consister en un prolongement de la susdite membrane convenablement conformée, ou être elle-même, au moins partiellement, enveloppée par la membrane.

Le susdit sommier pourra, quant à lui, consister en un ressort de forme torique en matière flexible éventuellement recouverte par une enveloppe primaire.

Selon un autre mode d'exécution de l'invention, le susdit deuxième élément d'étanchéité comprend une enveloppe formant un logement annulaire et dont une portion qui présente une forme bombée de convexité orientée vers l'extérieur, constitue à la fois une surface d'étanchéité et un sommier élastiquement déformable agencé de manière à agir sur ladite surface d'étanchéité, et en ce que le susdit anneau de réaction consiste en une pièce annulaire, réalisée à l'aide d'une bande de métal à profil incurvé enroulée en spirale et dont une face radiale concave vient en appui sur deux nervurations latérales internes formées sur l'enveloppe, de part et d'autre de la susdite portion.

Des modes de réalisation de l'invention seront décrits ci-après, à titre d'exemples non limitatifs, avec référence aux dessins annexés dans lesquels :

    – La figure 1 est une demi-coupe axiale d'un premier mode d'exécution d'une garniture selon l'invention ;

    – La figure 2 montre une autre variante d'exécution de cette garniture ;

    – La figure 3 est une coupe partielle d'un robinet à papillon dans lequel la garniture représentée sur la figure 1 est portée par le corps du robinet ; et

    – La figure 4 est une demi-coupe axiale de l'élément d'étanchéité servant à assurer l'étanchéité dynamique d'un autre mode d'exécution d'une garniture selon l'invention.

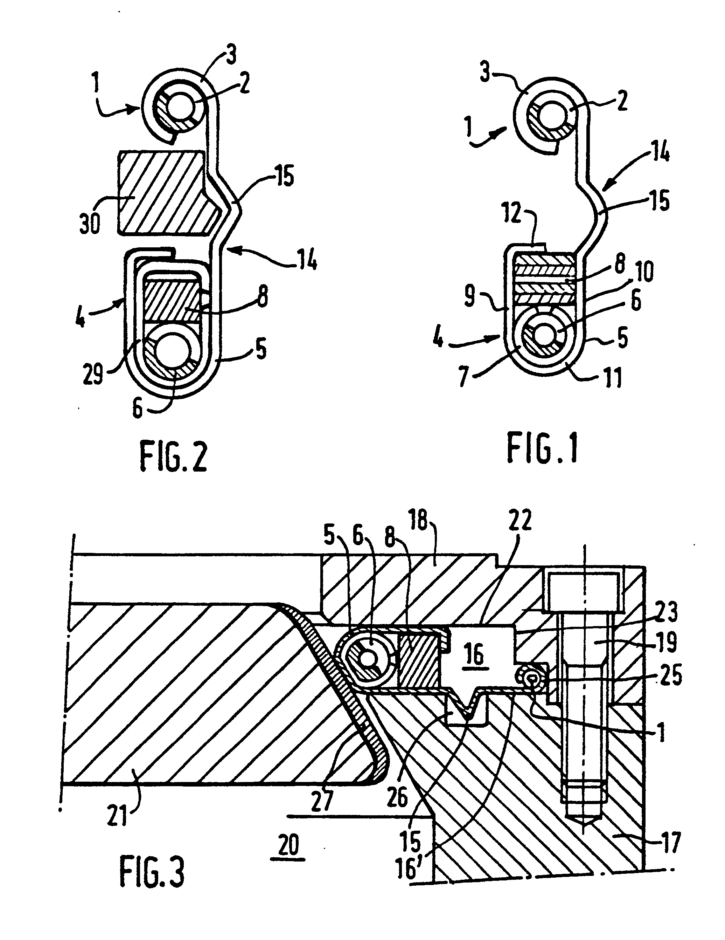

La garniture d'étanchéité représentée sur la figure 1 comprend deux structures de joint, sensiblement concentriques, à savoir :

    – une première structure de joint torique métallique flexible 1 comprenant, de façon classique, un ressort hélicoïdal 2 de forme torique partiellement recouvert d'une enveloppe d'étanchéité 3 avec éventuellement, intercalée entre ledit ressort 2 et ladite enveloppe d'étanchéité 3, une enveloppe primaire, cette première structure de joint 1 étant destinée à assurer une étanchéité statique, et
– une deuxième structure de joint 4 comprenant, dans une enveloppe d'étanchéité 5 présentant une forme annulaire de section sensiblement rectangulaire, un ressort hélicoïdal 6 de forme torique recouvert par une enveloppe primaire 7, et un anneau de réaction 8 de section rectangulaire monté serré contre l'enveloppe primaire 7.

D'une façon plus précise, l'enveloppe d'étanchéité 5 présente deux faces radiales parallèles 9, 10 et deux faces axiales, dont l'une 11, située à l'opposé de la structure de joint, qui présente une section circulaire, comprend la surface d'étanchéité, et dont l'autre 12 est droite.

Ainsi, l'ensemble torique formé par le ressort 6 et l'enveloppe primaire 7 vient épouser la concavité de la face axiale 11 de l'enveloppe d'étanchéité 5 et est donc, de ce fait, axialement maintenu.

De même, l'anneau de réaction 8 se trouve axialement retenu par les faces radiales 9, 10 et radialement retenu par la face axiale 12.

Dans cet exemple, les enveloppes d'étanchéité 3 et 5 des structures de joint 1 et 4 sont constituées par une seule et même pièce, par exemple métallique, formant dans sa partie médiane une membrane radiale d'étanchéité 14 élastiquement déformable permettant, d'une part, de réaliser la continuité de l'étanchéité entre les deux structures de joint 1 et 4 et, d'autre part, de jouer le rôle d'élément élastique assurant la souplesse de l'autocentrage de la structure de joint 4.

D'une façon plus précise, cette pièce présente une section de révolution de profil sensiblement en forme de C, dont les extrémités viennent former les susdites enveloppes d'étanchéité 3, 5 et dont l'âme, qui forme la membrane 14, présente une pliure circulaire 15 lui conférant une déformabilité élastique radiale.

Comme précédemment mentionné, l'anneau de réaction peut être réalisé à partir de divers matériaux. Dans cet exemple, il consiste en un feuillard spiralé.

A titre d'exemple, la garniture précédemment décrite peut avantageusement assurer l'étanchéité amont/aval d'un robinet à papillon.

Elle peut, à cet effet, être disposée (comme représenté figure 3) dans une cavité annulaire radiale 16 formée entre le flanc latéral 16' du corps 17 du robinet à papillon et une bride 18 fixée sur ledit flanc 16 au moyen de vis de serrage 19. Cette cavité 16 débouche dans la chambre intérieure 20 du robinet, à l'intérieur de laquelle peut se déplacer l'obturateur 21. Celui-ci peut par exemple consister en un papillon pouvant pivoter à l'intérieur du corps 17 et se déplacer en translation axiale en fin de course de fermeture.

La cavité annulaire 16 présente une section droite de forme sensiblement rectangulaire dont la largeur est sensiblement égale à la largeur de l'enveloppe d'étanchéité 5 de la structure de joint 4. La face latérale supérieure 22 et le fond 23 de cette cavité sont formés par un alésage étagé de la bride 18, tandis que la face latérale inférieure est formée par le flanc latéral 16' du corps.

Dans le fond de la cavité 16 est prévue une gorge annulaire 25, formée par un étagement d'alésage de la bride 18 et par le flanc latéral 16' du corps 17 du robinet.

Dans cette gorge annulaire 25 est montée serrée la structure de joint torique 1 de manière à obtenir la susdite étanchéité statique. Il est à noter que le montage de cette structure de joint 1 s'effectue au moment du montage de la bride 18, la pression d'étanchéité étant obtenue par exemple par serrage de la bride 18 sur le corps 17 du robinet.

Sur la face latérale inférieure de la cavité annulaire (flanc 16') est réalisé un évidement circulaire 26, de section sensiblement rectangulaire, dans lequel vient se disposer la pliure 15 de la membrane d'étanchéité 14.

La structure de joint 4 servant à obtenir l'étanchéité dynamique présente un grand diamètre légèrement inférieur au diamètre interne du corps 17 au niveau du logement 16 et du diamètre moyen de la tranche conoïde 27 du papillon 21, de sorte que cette structure de joint 4 fait légèrement saillie à l'intérieur de la chambre interne 20, et qu'en position de fermeture, la face axiale 11 de l'enveloppe 5 et le sommier formé par le ressort torique 6 se trouvent comprimés entre l'anneau de réaction 8 et la tranche conoïde 27 du papillon 21.

Il est clair que cette structure permet un autocentrage de la structure de joint 4 autour de la tranche 27 du papillon 21 au cours de la fermeture, tout en garantissant une pression d'étanchéité homogène au niveau des surfaces en contact de ces deux éléments.

La garniture d'étanchéité représentée sur la figure 2 présente une structure similaire à celle précédemment décrite, en ce sens qu'elle comporte également :
– une première structure de joint torique métallique flexible 1 comprenant un ressort hélicoïdal 2 de forme torique partiellement recouvert d'une enveloppe d'étanchéité 3, cette première structure de joint étant également destinée à assurer une étanchéité statique, et
– une seconde structure de joint 4 destinée à assurer l'étanchéité dynamique et comprenant une enveloppe d'étanchéité 5 présentant une forme annulaire de section sensiblement rectangulaire, les enveloppes d'étanchéité 3, 5 de ces deux structures de joint 1, 4 étant constituées par une seule et même pièce présentant une section de révolution sensiblement en forme de C dont les extrémités viennent former les enveloppes d'étanchéité 3, 5 et dont l'âme, qui forme la membrane 14, présente une pliure circulaire 15 lui conférant une déformabilité élastique radiale.

Toutefois, dans ce cas, le sommier constitué par le ressort torique 6, et l'anneau de réaction 8 sont contenus dans une enveloppe primaire 29 dont la surface externe est conformée de manière à épouser la forme intérieure de l'enveloppe d'étanchéité 5, l'ensemble formé par cette enveloppe primaire 29, le ressort 6 et l'anneau de réaction 8 venant se loger et étroitement dans cette enveloppe d'étanchéité 5.

En outre, dans le volume annulaire compris entre les deux structures de joint 1, 4, on a également prévu un anneau de soutien 30 utilisable en option dans le cas où la garniture travaille à très haute pression.

Le principe de cette garniture qui est sensiblement le même que celui de la garniture représentée figure 1 ne sera donc pas décrit à nouveau.

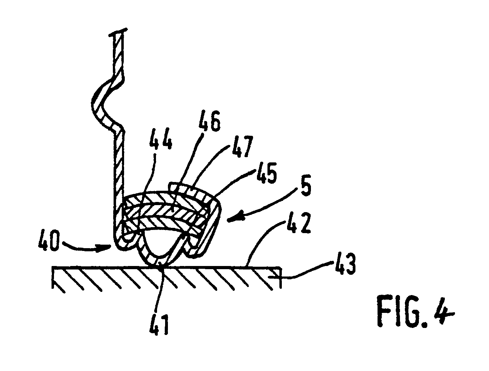

Dans l'exemple représenté sur la figure 4, le profil de la face axiale extérieure 40 de l'enveloppe 5 présente, dans sa partie médiane, une forme 41 bombée vers l'extérieur destinée à venir coopérer avec la tranche 42 de l'obturateur 43 et constituant aussi un sommier élastiquement déformable, cette forme bombée 41 étant bordée de deux replis latéraux formant vers l'intérieur de l'enveloppe deux nervurations 44, 45.

La pièce annulaire 46 logée dans l'enveloppe 5 est alors réalisée à partir d'une bande à profil incurvé et présente donc :

 – une face axiale concave contre laquelle viennent en appui les deux nervurations 44, 45 ; et
 – une face convexe sur laquelle vient s'appliquer la face axiale intérieure 47 de l'enveloppe 5.

Dans ce cas, le centrage de la pièce annulaire 46 est assuré par les faces radiales de l'enveloppe 5.

Il convient de noter que l'invention ne se limite pas à un type particulier de structure de joint 1 servant à assurer l'étanchéité statique, cette structure pouvant notamment consister en un talon ou même en une bordure circulaire plane radiale.

On précisera en outre que les garnitures selon l'invention peuvent être entièrement métalliques. Cependant, elles pourraient également être réalisées en partie ou même en totalité à l'aide d'autres matériaux éventuellement composites.

**Revendications**

1. Garniture d'étanchéité apte à assurer l'étanchéité amont/aval d'un obturateur du type comprenant un organe d'obturation mobile (21) à l'intérieur d'un corps tubulaire (17, 18) cette garniture comportant :
 – deux éléments d'étanchéité de forme circulaire, sensiblement concentriques, à savoir : un premier élément (1, 2, 3) destiné à assurer une étanchéité statique et un deuxième élément (4, 5, 6) comprenant, du côté opposé à la première structure (1), une surface d'étanchéité circulaire (11) destinée à coopérer avec une portée d'étanchéité également circulaire pour assurer une étanchéité dynamique,
 – une membrane (14), élastiquement déformable, assurant une liaison étanche entre lesdits éléments (1 à 6), et
 – un anneau de réaction (8), monté serré contre le deuxième élément d'étanchéité (5, 6), à l'opposé de la susdite surface d'étanchéité (11), de manière à réaliser un ensemble radialement mobile à distance du premier élément d'étanchéité (1, 2, 3),
caractérisée en ce que le susdit deuxième élément d'étanchéité (4) comprend une enveloppe (5) formant un logement annulaire dont une portion circulaire constitue la susdite surface d'étanchéité, ce logement renfermant d'une part un sommier annulaire élastiquement déformable (6, 7) agencé de manière à agir sur ladite surface d'étanchéité (11) et d'autre part l'anneau de réaction (8) qui est maintenu serré contre ledit sommier (7), et en ce que cette enveloppe comprend deux parois opposées (9, 10) qui assurent un centrage permanent dudit sommier (7) et dudit anneau (8).

2. Garniture selon la revendication 1, caractérisée en ce que ledit sommier consiste en un ressort hélicoïdal (6) de forme torique.

3. Garniture selon la revendication 2, caractérisée en ce que le susdit ressort hélicoïdal (6) est au moins en partie recouvert d'une enveloppe primaire (7).

4. Garniture selon l'une des revendications précédentes, caractérisée en ce que le susdit sommier (7) et le susdit anneau de réaction (8) sont tous deux logés dans une enveloppe primaire (29), elle-même contenue dans la susdite enveloppe (5).

5. Garniture selon l'une des revendications précédentes, caractérisée en ce que le susdit anneau de réaction (8) est réalisé à l'aide d'un feuillard spiralé.

6. Garniture selon l'une des revendications précédentes, caractérisée en ce qu'entre les deux susdits éléments d'étanchéité (1, 4) est monté flottant un anneau de soutien (30).

7. Garniture selon l'une des revendications précédentes, caractérisée en ce que le susdit premier élément d'étanchéité (1) présente une structure similaire à celle d'un joint torique métallique flexible et comprend, en conséquence, un ressort hélicoïdal (2) de forme torique recouvert d'une enveloppe d'étanchéité (3), avec interposition éventuelle d'une enveloppe primaire.

8. Garniture selon l'une des revendications précédentes, caractérisée en ce que l'enveloppe d'étanchéité (5) du second élément d'étanchéité (4) et la susdite liaison étanche (14) sont constituées par une seule et même pièce.

9. Garniture selon les revendications 7 et 8, caractérisée en ce que les enveloppes (3, 5) des susdits premier et deuxième éléments d'étanchéité (1, 4) et la susdite liaison étanche (14) sont constituées par une seule et même pièce.

10. Garniture d'étanchéité apte à assurer l'étanchéité amont/aval d'un obturateur du type comprenant un organe d'obturation mobile (43) à l'intérieur d'un corps tubulaire, cette garniture comportant :

– deux éléments d'étanchéité de forme circulaire, sensiblement concentriques, à savoir : un premier élément (1) destiné à assurer une étanchéité statique et un deuxième élément (40) comprenant, du côté opposé à la première structure (1), une surface d'étanchéité circulaire (41) destinée à coopérer avec une portée d'étanchéité également circulaire (42) pour assurer une étanchéité dynamique,

– une membrane, élastiquement déformable, assurant une liaison étanche entre lesdits éléments (1, 40), et

– un anneau de réaction (46), monté serré contre le deuxième élément d'étanchéité, à l'opposé de la susdite surface d'étanchéité (41), de manière à réaliser un ensemble radialement mobile à distance du premier élément d'étanchéité (1),

caractérisée en ce que le susdit deuxième élément d'étanchéité (40) comprend une enveloppe (5) formant un logement annulaire et dont une portion qui présente une forme bombée de convexité orientée vers l'extérieur, constitue à la fois une surface d'étanchéité (41) et un sommier élastiquement déformable agencé de manière à agir sur ladite surface d'étanchéité (41), et en ce que le susdit anneau de réaction consiste en une pièce annulaire (46), réalisée à l'aide d'une bande de métal à profil incurvé enroulée en spirale et dont une face radiale concave vient en appui sur deux nervurations latérales internes (44, 45) formée sur l'enveloppe (5), de part et d'autre de la susdite portion (41).

11. Garniture selon l'une quelconque des revendications précédentes, caractérisée en ce qu'elle est entièrement réalisée en métal.

## Patentansprüche

1. Dichtung, um oberhalb und unterhalb einer Absperrvorrichtung eine Abdichtung vorzunehmen, wobei besagte Absperrvorrichtung des Typs ist, der ein Absperrorgan aufweist (21), das im Inneren eines rohrförmigen Körpers (17, 18) beweglich ist, und besagte Dichtung aufweist :

– zwei kreisförmige, im wesentlichen konzentrische, Dichtelemente, nämlich : ein erstes Element (1, 2, 3) zur statischen Abdichtung und ein zweites Element (4, 5, 6), das auf der von der ersten Struktur (1) abgewandten Seite eine kreisförmige Dichtfläche (11) aufweist, die mit einer gleichfalls kreisförmigen Dichtfläche zusammenarbeitet, um die dynamische Abdichtung zu bewerkstelligen,

– eine elastisch verformbare Membran (14) zur dichtenden Verbindung der besagten Elemente (1 bis 6), und

– einen Reaktionsring (8), der auf der der besagten Dichtfläche (11) entgegensetzten Seite gegen das zweite Dichtelement (5, 6) geklemmt wird, um so in einem bestimmten Abstand vom ersten Dichtelement (1, 2, 3) eine radial bewegliche Einheit zu schaffen, dadurch gekennzeichnet,

dass das besagte zweite Dichtelement (4) eine eine ringförmige Behausung bildende Hülle (5) aufweist, von der ein kreisförmiger Abschnitt die besagte Dichtfläche bildet und besagte Behausung einerseits einen elastisch verformbaren ringförmigen Träger (6, 7) aufweist, der so angeordnet ist, dass er auf besagte Dichtfläche (11) wirkt und andererseits den Reaktionsring (8), der gegen besagten Träger (7) geklemmt ist und dass besagte Hülle zwei gegenüberliegende Wände (9, 10) aufweist, die eine dauernde Zentrierung des besagten Trägers (7) und des besagten Rings (8) garantieren.

2. Dichtung nach Anspruch 1, dadurch gekennzeichnet, dass besagter Träger aus einer wulstförmigen Spiralfeder (6) besteht.

3. Dichtung nach Anspruch 2, dadurch gekennzeichnet, dass besagte Spiralfeder (6) mindestens teilweise von einer Primärhülle (7) umgeben ist.

4. Dichtung nach einem der vorhergehenden Ansprüche, dadurch gekennzeichnet, dass der besagte Träger (7) und der besagte Reaktionsring (8) beide in einer Primärhülle (29) angeordnet sind, die ihrerseits in der besagten Behausung (5) enthalten ist.

5. Dichtung nach einem der vorhergehenden Ansprüche, dadurch gekennzeichnet, dass der besagte Reaktionsring (8) aus einem spiralförmig gewundenen Metallstreifen hergestellt ist.

6. Dichtung nach einem der vorhergehenden Ansprüche, dadurch gekennzeichnet, dass zwischen den besagten beiden Dichtelementen (1, 4) ein Trägerring (30) beweglich eingebaut ist.

7. Dichtung nach einem der vorhergehenden Ansprüche, dadurch gekennzeichnet, dass das besagte erste Dichtelement (1) eine Struktur ähnlich der eines flexiblen Metall O-Rings aufweist und infolgedessen eine torische, mit einer Dichthülle versehenen Spiralfeder (2), mit eventueller Zwischenlagerung einer Primärhülle.

8. Dichtung nach einem der vorhergehenden Ansprüche, dadurch gekennzeichnet, dass die Dichthülle (5) des zweiten Dichtelements (4) und die besagte dichte Verbindung (14) aus einem Stück bestehen.

9. Dichtung nach den Ansprüchen 7 und 8, dadurch gekennzeichnet, dass die Hüllen (3, 5) der besagten ersten und zweiten Dichtelemente (1, 4) und die besagte dichte Verbindung (14) aus einem Stück bestehen.

10. Dichtung, um oberhalb und unterhalb einer Absperrvorrichtung eine Abdichtung vorzunehmen, wobei besagte Absperrvorrichtung des Typs ist, der ein Absperrorgan (43) aufweist, das im Inneren eines rohrförmigen Körpers beweglich ist und besagte Dichtung aufweist :

– zwei kreisförmige, im wesentlichen konzentrisch angeordnete Dichtelemente, nämlich : ein erstes Element (1) zur statischen Abdichtung und ein zweites Element (40), das auf der von der ersten Struktur (1) abgewandten Seite eine kreisförmige Dichtfläche (41) aufweist, die mit einer gleichfalls kreisförmigen Dichtfläche (42) zusammenarbeitet, um die dynamische Abdichtung zu bewerkstelligen,

– eine elastisch verformbare Membran (14) zur dichtenden Verbindung der besagten Elemente (1, 40), und

– einen Reaktionsring (46), der auf der der besagten Dichtfläche (41) entgegengesetzten Seite gegen das zweite Dichtelement geklemmt wird, um so in einem bestimmten Abstand vom ersten Dichtelement (1) eine radial beweglich Einheit zu schaffen, dadurch gekennzeichnet,

dass das besagte zweite Dichtelement (40) eine eine ringförmige Behausung bildende Hülle (5) aufweist, von der ein kreisförmiger Abschnitt, konvexer, nach aussen gerichteter Form, gleichzeitig die besagte Dichtfläche (41) bildet und einen elastisch verformbaren, ringförmigen Träger, der so angeordnet ist, dass er auf besagte Dichtfläche (41) wirkt und dass der besagte Reaktionsring aus einem ringförmigen, aus einem Metallstreifen mit gekrümmtem Profil gefertigten Teil (46) besteht, der spiralförmig aufgerollt ist und dessen eine konkave Fläche sich auf zwei innere, beidseitig des besagten Abschnitts (41) auf der Hülle geformte Seitenrippen (44, 45) stützt.

11. Dichtung nach einem der vorhergehenden Ansprüche, dadurch gekennzeichnet, dass sie gänzlich aus Metall gefertigt ist.

## Claims

1. A sealing liner for providing sealing upstream/downstream of a closure means of the type comprising a closure member (21) movable inside a tubular body (17, 18), this lining including :

– two circular substantially concentric sealing elements, namely : a first element (1, 2, 3) providing static sealing and a second element (4, 5, 6) including, on the side opposite the first structure (1), a circular sealing surface (11) intended to cooperate with a sealing face also circular so as to provide dynamic sealing,

– a resiliently deformable membrane (14) connecting said elements (1 to 6) sealingly together, and

– a reaction ring (8), applied against the second sealing element (5, 6) opposite said sealing surface (11) so as to achieve a radially movable assembly distant from the first sealing element (1, 2, 3),

characterized in that said second sealing element (4) includes a cover (5) forming an annular housing a circular portion of which forms said sealing surface, said housing containing, on the one hand, an annular resiliently deformable bed (6, 7) arranged so as to act on said sealing surface (11), and on the other hand, the reaction ring (8), held applied against said bed (7), and in that said housing has two opposite walls (9, 10) so as to provide permanent centering of said bed (7) and said ring (8).

2. The liner as claimed in claim 1, characterized in that said bed consists of a helical toric shaped spring (6).

3. The liner as claimed in claim 2, characterized in that said helical spring (6) is at least partially covered by a primary housing (7).

4. The liner as claimed in one of the preceding claims, characterized in that said bed (7) and said reaction ring (8) are both housed in a primary housing (29) itself contained in said housing (5).

5. The liner as claimed in one of the preceding claims, characterized in that said reaction ring (8) is made from a spirally wound metal strip.

6. The liner as claimed in one of the preceding claims, characterized in that a support ring (30) is mounted floating between said two sealing elements (1, 4).

7. The liner as claimed in one of the preceding claims, characterized in that said first sealing element (1) has a structure similar to a resilient metal O-ring and therefore comprises a helical spring (2) of toric shape covered by a sealing housing (3) with possible interpositioning of a primary housing.

8. The liner as claimed in one of the preceding claims, characterized in that said sealing housing (5) of the second sealing element (4) and said sealed connection (14) are formed by one and the same piece.

9. The liner as claimed in claims 7 and 8, characterized in that the housings (3, 5) of said first and second sealing elements (1, 4) and said sealed connection (14) are formed by one and the same piece.

10. A sealing liner for providing sealing upstream/downstream of a closure means of the type comprising a closure member (43) movable inside a tubular body, said lining including :

– two circular substantially concentric sealing elements, namely : a first element (1) providing static sealing and a second element (40) including, on the side opposite the first structure (1), a circular sealing surface (41) intended to cooperate with a sealing face (42) also circular so as to provide dynamic sealing,

– a resiliently deformable membrane connecting said elements (1, 40) together, and

– a reaction ring (46) applied against the second sealing element opposite said sealing surface (41) so as to achieve a radially movable assembly distant from the first sealing element (1),

characterized in that said second sealing element (40) includes a cover (5) forming an annular housing, a portion of which has a convex shape directed towards the outside, forms both a sealing surface (41) and a resiliently deformable bed, arranged so as to act on said sealing surface (41), and in that said reaction ring consists of an annular piece (46) made from a spirally wound, curved metal strip, one concave radial surface of which bears on two internal lateral ribs (44, 45) formed on the housing (5) on each side of said portion (41).

11. The liner as claimed in anyone of the preceding claims, characterized in that it is made entirely from metal.

FIG.2

FIG.1

FIG.3

FIG. 4